Europäisches Patentamt

European Patent Office

Office européen des brevets

(19)

(11) Publication number: **0 086 522**
**A1**

(12) **EUROPEAN PATENT APPLICATION**

(21) Application number: **83200162.2**

(22) Date of filing: **28.01.83**

(51) Int. Cl.³: **F 16 H 7/12**

(30) Priority: **13.02.82 NL 8200555**

(71) Applicant: **De Rotterdamsche Droogdok Maatschappij B.V., Heyplaatstraat 4, NL-3089 RC Rotterdam (NL)**

(43) Date of publication of application: **24.08.83 Bulletin 83/34**

(72) Inventor: **Klaassen, Lambertus Gerardus M., Ir., A.W. Lipsstraat 6, NL-3262 GA Oud Beijerland (NL)**

(84) Designated Contracting States: **AT BE CH DE FR GB IT LI LU NL SE**

(74) Representative: **Noz, Franciscus Xaverius, Ir. et al, Boschdijk 155 P.O. Box 645, NL-5600 AP Eindhoven (NL)**

(54) **Stretching device.**

(57) Device for tensioning an elongate member in particular a cable or chain guided along a bracing wheel (1) journalled in a support (3), the support (3) being loaded by a spring (11) associated with the tensioning device, whereby the spring (6) is locked between the support (3) and a first stop (12) fastened to a shaft (9) surrounded by the spring (11), whose end remote from the first stop (12) is passed through a hole (4) in the support (3) said shaft (9) being provided with a second stop (10) which limits a displacement of the support (3) with respect to the shaft (9) under the action of the spring (11) force, whilst into the end of the shaft (9) remote from the first stop (12) is screwed a bolt (20), which extends in the shaft (9) into the part of the shaft (9) surrounded by the spring (11) and the end of the bolt protruding from the shaft is provided with means (22) whose dimension exceeds the diameter of the hole (4) in the support (3).

0086522

-1-
STRETCHING DEVICE

The invention relates to a stretching device for stretching an elongate member connected with a support, in particular a cable or chain guided along a bracing wheel journalled in said support, the support being loaded by a spring associated with the stretching device.

In such constructions the spring is usually exposed to high tension whilst the various parts of the stretching device are subjected to heavy forces under often wear-aggravating conditions.

The invention has for its object to provide a stretching device of the kind set forth in which even in the event of a breakdown parts of the stretching device such as the spring are prevented from being slung away by the tension prevailing in the spring.

According to the invention this can be achieved by locking the spring between the support and a first stop fastened to a shaft surrounded by the spring and having its end remote from the first stop passed through a hole in the support and being provided with a second stop, which limits a displacement of the support with respect to the shaft under the action of the spring force, whilst into the end of the shaft remote from the first stop a bolt is screwed, which extends in the shaft as far as into the shaft part surrounded by the spring, the end of the bolt protruding out of the shaft being provided with means having a size exceeding the cross-section of the hole in the support.

In normal operation the bolt will not be loaded, but in the event of breakdown of the shaft, as the case may be, usually occurring in the weakest part of the shaft located near the support, the bolt will prevent the parts of the stretching device located between the support and the first stop from jumping out.

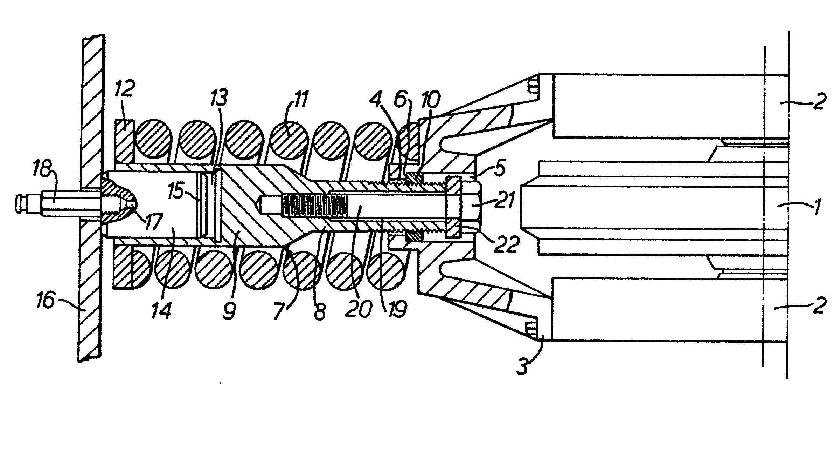

The invention will be described more fully hereinafter with reference to the accompanying Figure schematically showing an embodiment of the construction in accordance with the invention partly in an elevational view and partly in a sectional view.

Referring to the Figure, a bracing wheel 1, along which a cable or chain to be stretched can be guided, is rotatably journalled in two bearing plates 2 located one on each side of the wheel 1 and being fastened to an at least substantially U-shaped bracket 3. In the web of the bracket is made a continuous bore formed by two parts 4 and 5 of different diameters. Thus a shoulder 6 is formed at the transitional area between the parts 4 and 5 of the bore.

The stretching device furthermore comprises a shaft 7 formed by a first part 8 having external screwthread and a part 9 having a larger diameter than the part 8.

The thinner, screwthreaded part 8 of the shaft is inserted into the bore 4,5 of the bracket 3 and a ring 10 is screwed on said screwthreaded part up to the shoulder 6. If desired, a set screw (not shown) may be used to lock the annular nut 10. The shaft is surrounded by a helical compression spring 11 which is locked in between the bracket 3 and an annular plate 12 fastened to the end of the shaft 7 remote from the bracket 3 and forming a stop.

The end of the shaft 7 remote from the bracket 3 has a blind bore 13 forming a cylinder space for a piston 14 arranged in the bore. The end of the piston directed to the bottom of the bore 13 is provided with at least one sealing ring 15 arranged in a groove in the piston 14.

The end of the piston 14 protruding out of the bore 13 is in contact with a frame part 16 of the implement equipped with the stretching device.

From the Figure it will furthermore be seen that the piston 14 has a continuous bore 17. With one end of said bore 17 communicates a grease nipple so that grease can be pressed via the grease nipple and the bore 17 into the space between the bottom of the bore 13 in the shaft 7 and the head face of the piston 14 directed towards said bottom.

In the end of the shaft 7 remote from the stop 12 is made a further blind bore 19 extending through the thin part 8 of the shaft 7 as far as into the thick part 9 of the shaft 7, at least the lower part of said blind bore 19 being provided with screwthread. Into the bore 19 is screwed a bolt 20. A ring 22 is clamped tight between the head 21 of the bolt 20 and the end of the thin part 8 of the shaft 7.

The stretching device is mounted so that the shoulder 6 is in contact with the nut 10 and the chain or the like is stretched.When the chain or the like is loaded, the spring can be compressed by the influence of the fixation of the chain or the like.

If after a period of time, for example, due to wear or elongation of the cable or chain guided along the bracing wheel 1, the cable or chain is no longer sufficiently taut, and begins to sag,the sagging can be eliminated by pressing grease by means of the grease nipple 18 into the bore 13 closed by the piston 14. As a result the shaft 7 tends to move to the right as viewed in the Figure so that the spring 11 is again stretched. Pressing grease into the bore 13 can be continued until the correct tension of the chain, cable or the like is obtained with the aid of the bracing wheel exerting pressure on the cable or chain to the right as viewed in the Figure. By mounting the piston 14 in the shaft surrounded by the spring 11 a compact structure of the stretching device can be obtained.

A breakdown of the stretching device is likely to occur usually in the parts most heavily loaded,for example, the thin part of the shaft 7 or by fracture of shift of the annular nut 10. In both cases the spring tension will be met by the bolt 20 and the ring 22 ,the size of which is such that it cannot pass through the part 4 of the bore in the bracket 3 so that the relationship between the thicker part 9 of the shaft receiving the end of the bolt 20 and the bracket is invariably maintained even if said parts 8 and/or 10 break down.It is thus avoided that the spring 11 or other parts of the stretching device should jump away due to the spring tension at the occurrence of a breakdown.

-4-

For mounting the stretching device the shaft 7 can be put upright so that the spring 11 can be slipped onto the shaft from above, after which the bracket 3 can be arranged on the shaft. Subsequently the bracket 3 can be urged downwards by means of a press until the desired bias tension of the spring is attained, after which the nut 10 can be put in place. When the nut 10 has been definitely fixed, the assembly of the shaft 7, the spring 11 arranged thereon and the bracket 3 can be removed from below the press, after which the further parts can be mounted. Subsequently the stretching device can be built in the implement concerned and by introducing grease into the space 13 the chain, cable or the like can be stretched. For dismounting the inverse order of succession applies. The fact that mounting and dismounting of the spring 11 require the use of a press will prevent that such mounting and dismounting should be carried out by unskilled persons on a site so that additional safety is obtained.

The figures used in the claims are only meant to explain more clearly the intention of the invention and are not supposed to be any restriction concerning the interpretation of the invention.

0086522

-1-

CLAIMS:

1. A stretching device for stretching an elongate member connected with a support, in particular a cable or chain guided along a bracing wheel journalled in said support, the support being loaded by a spring associated with the stretching device characterized in that the spring(11) is locked between the support (2,3 ) and a first stop (12) fastened to a shaft (7) surrounded by the spring (11), whose end remote from the first stop (12) is passed through a hole (4,5) in the support (2,3) said shaft being provided with a second stop (10) which limits a displacement of the support (2,3) with respect to the shaft (7) under the action of the spring force, whilst into the end of the shaft (7) remote from the first stop (12) is screwed a bolt (20), which extends in the shaft (7) as far as into the part of the shaft (7) surrounded by the spring and the end of the bolt protruding from the shaft is provided with means (21,22) of a size exceeding the cross section of the hole (4) in the support.

2. A stretching device as claimed in Claim 1 characterized in that the second stop is formed by a ring screwed onto the externally screwthreaded part (8) of the shaft (7) passed through the hole (4).

3.      A stretching device as claimed in Claim 1 or 2 characterized in that between the head (21) of the bolt (20) and the associated end of the shaft (7) there is clamped tight a ring (22), the outer diameter of which exceeds the smaller diameter of the hole (4) in the support (2,3), through which the shaft (7) is passed.

4.      A stretching device as claimed in anyone of the preceding Claims characterized in that the part (9) of the shaft (7) remote from the second stop (10) has a larger diameter than the part (8) of the shaft (7) passed through the hole (4) in the support (2,3).

5.      A stretching device in particular as claimed in anyone of the preceding Claims characterized in that in the end of the shaft (7) remote from the support (2,3) there is provided a blind bore (13), in which a piston (14) is arranged so that one end thereof protrudes out of the bore, said piston having a passage opening out at one end in the blind bore and being provided at the other end with a grease nipple.

0086522

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | US-A-1 374 643 (FISCHBACH) | 1 | F 16 H 7/12 |
| | --- | | |
| A | US-A-2 014 397 (SMITH) | 1 | |
| | --- | | |
| A | US-A-3 479 894 (DE BUHR) | 1 | |
| | --- | | |
| A | US-A-4 283 182 (KRAFT) | 1 | |
| | ----- | | |

| TECHNICAL FIELDS SEARCHED (Int. Cl. 3) |
|---|
| F 16 H 7/00 |

The present search report has been drawn up for all claims

| Place of search | Date of completion of the search | Examiner |
|---|---|---|
| THE HAGUE | 29-03-1983 | FLORES E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82